# EUROPEAN PATENT APPLICATION

(11) **EP 0 724 366 A2**
(43) Date of publication of application: **31.07.1996**
(21) Application number: 96100407.4
(22) Date of filing: 12.01.1996
(51) Int. Cl.: H04Q 1/14, H05K 7/00

(54) **Distribution panel and communications cabinet comprising the same**

(30) Priority: 26.01.1995 IL 11245195
(71) Applicant: EL-GAD PHONE LTD., Tel Aviv 68104 (IL)
(72) Inventor: Seluk, Isaac, Rishon-LeZion 75503 (IL)
(74) Representative: Blum, Rudolf Emil Ernst

(57) **Abstract**

A distribution panel for use in a communications cabinet is claimed. A communications cabinet usually comprises a compartment, containing the wiring of the cabinet, which has an opening allowing access into the interior of the compartment, and a panel which is adapted to cover the opening of the compartment. The panel connects between a first set of stations and a second set of stations by use of connectable wiring.

The panel of the invention comprises: (1) a first set of connectors, positioned on an exterior side of the panel, which are capable of being linked to a first set of stations, and (2) a second set of connectors, also located on the exterior side of the panel, which are connected to the first connectors and which are capable of being linked to a second set of stations by a plurality of wires. This configuration enables a technician to service the panel from the front of the cabinet, not only when servicing the first set of connectors, but also when accessing the second set of connectors which hitherto were inaccessible from the front of the cabinet. A communications cabinet comprising the panel of the invention is also claimed.

## Description

### FIELD OF THE INVENTION

The present invention relates to a distribution panel which is mounted on a communication cabinet.

### BACKGROUND OF THE INVENTION

Communication cabinets are widely used in voice and data networking applications. The communication cabinet serves as an interface between different sets of stations as, for example, between a number of client computer stations and a common server, or between a number of terminals and a mainframe computer. In the following description, the non-limiting example of an interface between a number of sub-stations and a central station will be used for the sake of simplicity.

A communication cabinet usually comprises a cabinet or compartment containing the wiring and various modules of the interface and having an opening at one or both ends, and a distribution panel, which is generally a printed circuit board (PCB), mounted in a rigid frame which is fastened to the compartment over the opening. The distribution panel generally contains a first set of connectors, e.g. RJ-45 connectors, positioned on its exterior side, to which the various sub-stations can be hooked up, and a second set of connectors on the interior side of the panel (facing the compartment). Wires lead from each of the interior connectors via various electronic modules to one or more lines which hook up with one or more central stations. The two sets of connectors are interconnected through the circuitry of the PCB.

The panel is generally installed by mounting it over the opening of the compartment and then connecting the wiring in the compartment to the second set of connectors. Access to the second connectors is usually through an opening in the back of the communication cabinet. This necessitates distancing the cabinet from any walls so that the technician can reach the panel from the back. The technician's access to the connectors is further hampered by the various wires and other electronic modules in the compartment. The problem of difficult access to the second connectors repeats itself during routine maintenance, servicing, and the introduction of system modifications.

### SUMMARY OF THE INVENTION

It is an object of the present invention to provide a distribution panel for use with a communications cabinet which, in many cases, can be serviced without having to access the panel from the rear of the cabinet.

It is a further object of the present invention to provide a communications cabinet including an easily serviced distribution panel.

According to one aspect of the present invention, there is provided a distribution panel for use in a communications cabinet which connects between a first set of stations and a second set of stations by use of connectable wiring. The cabinet comprises a compartment containing the wiring of the cabinet and having at least one open side, and the panel which is adapted to covering an opening in the side of the compartment. The panel comprises a first set of connectors, positioned on an exterior side of the panel, which are capable of being linked to the first set of stations, and a second set of connectors which are capable of being linked to the second set of stations by a plurality of wires, the second connectors being connected to the first connectors, wherein the second connectors are located on the exterior side of the panel.

In a preferred embodiment of the present invention, the distribution panel comprises a plurality of apertures through which the wires can pass.

Positioning the second set of connectors on the exterior side of the distribution panel overcomes the disadvantages of the prior art panel by allowing the technician to service the panel from the front of the cabinet, not only when servicing the first set of connectors, but also when accessing the second set of connectors which hitherto were inaccessible from the front of the cabinet. By using the panel of the invention, it becomes necessary for the technician to approach the cabinet from its rear side only in those cases where the interior wiring or modules need to be accessed, but not during installation nor during the testing of connections during routine maintenance. Thus the technician's task is significantly eased.

According to another aspect of the present invention, there is provided a communications cabinet for connecting between a first set of stations and a second set of stations by use of connectable wiring, comprising a compartment containing the wiring of the cabinet and having an opening on a side; and a distribution panel covering the opening of the compartment. The panel includes a first set of connectors, positioned on the exterior side of the panel, which are capable of being linked to the first set of stations, and a second set of connectors which are capable of being linked to the second set of stations by a plurality of wires, the second connectors being connected to the first connectors, wherein the second connectors are located on the exterior side of the panel.

According to yet another aspect of the present invention, there is provided a PCB for use in a distribution panel according to the present invention comprising a plurality of apertures through which wires can be passed.

### BRIEF DESCRIPTION OF THE DRAWINGS

The present invention will be better understood from the following detailed description of a preferred embodiment, taken in conjunction with the following drawings in which:
Figs. 1a and 1b are front and rear perspective views, respectively, of a prior art distribution panel;
Fig. 2 is a front perspective view of a distribution panel according to one embodiment of the present invention; and
Fig. 3 is a front perspective view of a communications cabinet employing the panel of Fig. 2.

### DETAILED DESCRIPTION OF A PREFERRED EMBODIMENT

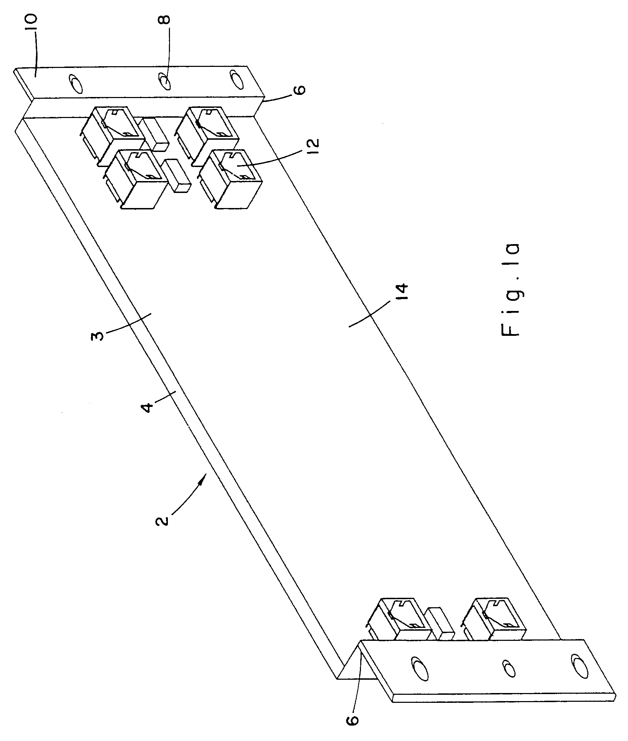

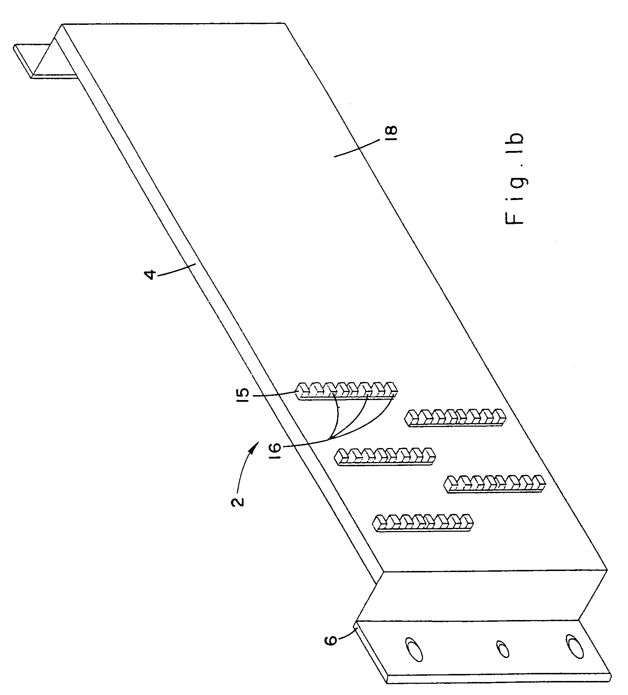

Reference is now made to Figs. 1a and 1b which show a distribution panel of a communications cabinet according to the prior art. The panel 2 comprises a PCB 3 mounted on a rigid frame 4 having two right angled shoulders 6 on either side of the board. A series of holes 8 are drilled in the sections 10 of the shoulders which are parallel to the PCB. The panel is coupled to the compartment by means of bolts or screws which pass through the holes 8. It is obvious to the skilled man of the art that other means may be used to couple the panel to the cabinet.

One or more rows of first connectors 12, of which only three are illustrated in each row in Fig. 1a, are mounted on the front side 14 of the panel 2 (in the present disclosure, the side of the panel facing outward when the panel is mounted on the communications cabinet is referred to interchangeably as the front or exterior side, and the side of the panel facing inward towards the cabinet is referred to interchangeably as the rear or interior side).

A number of columns 15 of second connectors 16 are mounted on the rear side 18 of the panel, as can be seen in Fig. 1b. Each column of second connectors 16 is connected to a specific first connector 12 through the circuitry of the PCB. The second connectors are connected by wires leading from each connector to a second set of stations by means of the wiring and/or modules contained within the communication cabinet, in a manner known to those skilled in the art. As mentioned in the background section above, a typical, but not exclusive, application for such a panel would be in a communications cabinet between a number of subordinate computer stations (first set of stations) and a common central station (second set of stations).

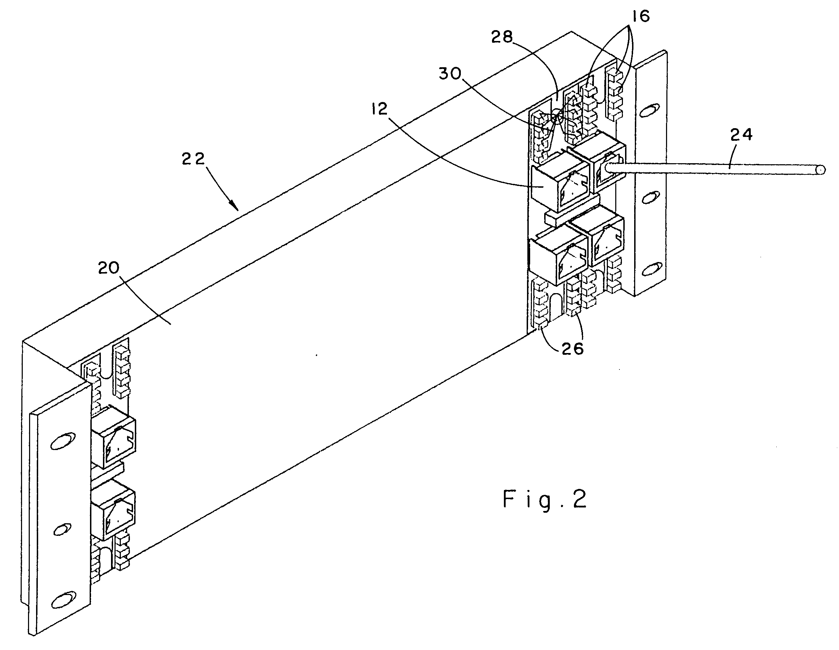

One embodiment of the present invention is illustrated in Fig. 2 in which can be seen the exterior side 20 of a distribution panel 22. Rows of first connectors 12 are mounted on the exterior side of the panel as in the prior art panel, and a cable 24 leading to a subordinate station is plugged into the connector 12. These connectors can be of any type or combination of types capable of being linked to the first set of stations which are to be connected up. In the present embodiment, these connectors are of the RJ-45 type. Any number of first connectors in any configuration may be mounted on the panel in accordance with the needs of the user.

In the distribution panel of the invention, however, the second connectors 16 are also located on the exterior side of the panel. The second connectors 16 are mounted in two parallel columns 26 in proximity to the first connector 12 to which they are connected, and on either side of a truncated oblong aperture 28. These connectors can be of any type, number and configuration, as is known to the skilled man of the art. Wires 30 lead from each second connector 16 through the aperture 28 into the interior of the communications cabinet. The placement of the second connectors on the exterior side of the panel allows the technician to manipulate the connections of the wires 30 with the connectors 16 without having to access the panel from the rear of the communications cabinet.

Although in the preferred embodiment the wires 30 pass through the apertures 28 to connect up with the second connectors 16, the wires may reach the connectors by other routes, such as over the top edge of the panel, so that the apertures are optional, though preferred.

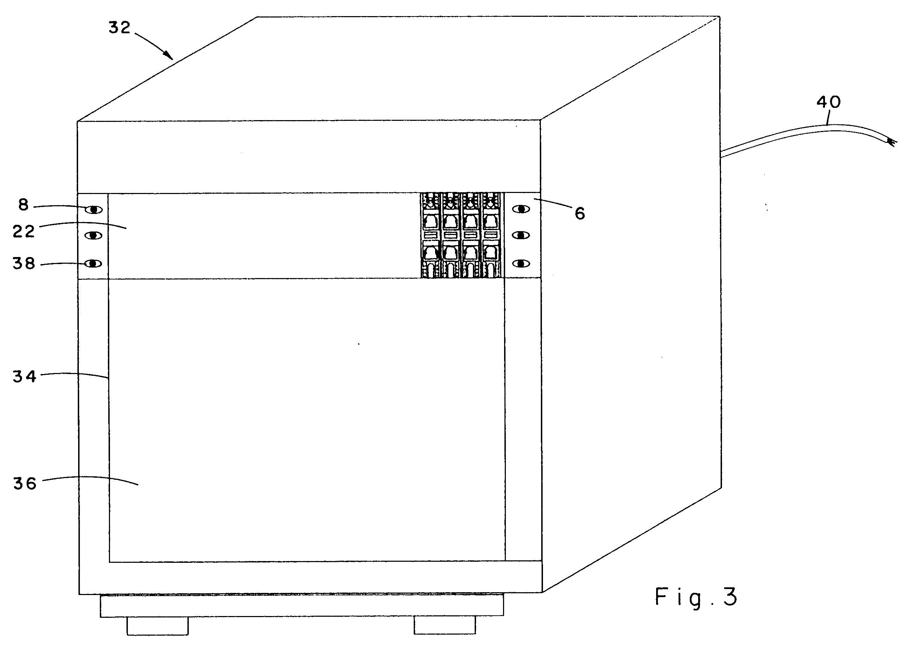

Referring now to Fig. 3, there is illustrated a communications cabinet 32 having an opening 34 in its front wall allowing access into a compartment 36 which contains the wiring of the cabinet. A panel 22 is fastened to the cabinet 32 by bolts 38 inserted through the holes 8 in the shoulders 6 of the panel. A cable 40 which can be connected to a central station leads out of the rear of the cabinet. The opening 34 of the cabinet can be covered by a number of distribution panels, or the remaining open area can be closed off, as needed.

It will be appreciated by persons skilled in the art that the present invention is not limited to what has been thus far described, but rather the scope of the present invention is limited only by the following claims:

## Claims

1. A distribution panel for use in a communications cabinet which connects between a first set of stations and a second set of stations by use of connectable wiring, said cabinet comprising a compartment containing the wiring of said cabinet and having an opening allowing access into the interior of said compartment, said panel being adapted to cover said opening of said compartment,said panel comprising:
**(i)** a first set of connectors, positioned on an exterior side of said panel, which are capable of being linked to said first set of stations, and
**(ii)** a second set of connectors which are capable of being linked to said second set of stations by a plurality of wires, said second connectors being connected to said first connectors;
wherein said second connectors are located on said exterior side of said panel.

2. A distribution panel according to claim 1 wherein said first set of stations consists of a plurality of subordinate stations and said second set of stations consists of one or more central stations.

3. A distribution panel according to claim 1 wherein a distinct group of second connectors is connected to each of said first connectors.

4. A distribution panel according to claim 1 wherein said panel further comprises a plurality of apertures through which said wires pass.

5. A distribution panel according to claim 4 wherein said apertures are positioned proximal to said secondary connectors.

6. A distribution panel according to claim 1 wherein at least one of said first set of connectors is a RJ-45 type connector.

7. A distribution panel according to claim 1 comprising a printed circuit board (PCB).

8. A distribution panel according to claim 1 wherein said compartment further comprises electronic modules associated with said wiring.

9. A distribution panel according to claim 1 further comprising means for coupling said panel to said compartment.

10. A communications cabinet for connecting between a first set of stations and a second set of stations by use of connectable wiring, comprising:
**(i)** a compartment containing the wiring of said cabinet and having an opening allowing access into said compartment; and
**(ii)** a distribution panel covering said opening of said compartment, which includes
a first set of connectors, positioned on the exterior side of said panel, which are capable of being linked to said first set of stations, and
a second set of connectors which are capable of being linked to said second set of stations by a plurality of wires, said second connectors being connected to said first connectors;
wherein said second connectors are located on said exterior side of said panel.

11. A PCB for use in a distribution panel according to claim 1 comprising a plurality of apertures through which wires can be passed.
